Europäisches Patentamt

European Patent Office

Office européen des brevets

(19)

(11) Veröffentlichungsnummer: **0 126 432 B2**

(12) **NEUE EUROPÄISCHE PATENTSCHRIFT**

(45) Veröffentlichungstag der neuen Patentschrift:
04.12.91 Patentblatt 91/49

(51) Int. Cl.$^5$: **B23C 5/24**

(21) Anmeldenummer: **84105587.4**

(22) Anmeldetag: **16.05.84**

(54) Fräswerkzeug.

(30) Priorität: **17.05.83 DE 3317916**

(43) Veröffentlichungstag der Anmeldung:
**28.11.84 Patentblatt 84/48**

(45) Bekanntmachung des Hinweises auf die
Patenterteilung:
**11.05.88 Patentblatt 88/19**

(45) Bekanntmachung des Hinweises auf die
Entscheidung über den Einspruch:
**04.12.91 Patentblatt 91/49**

(84) Benannte Vertragsstaaten:
**BE CH FR LI LU NL SE**

(56) Entgegenhaltungen:
**DE-A- 3 036 527**
**DE-C- 3 140 905**

(56) Entgegenhaltungen:
**FR-A- 2 162 885**
**FR-A- 2 165 595**
**FR-A- 2 508 361**
**°GB-A- 928 294**
**US-A- 1 468 774**
**US-A- 2 440 978**
**US-A- 2 846 757**

(73) Patentinhaber: **Walter Kieninger KG**
**Hartmetallwerkzeugfabrik**
**An den Stegmatten 7**
**W-7630 Lahr 17 (Mietersheim) (DE)**

(72) Erfinder: **Kieninger, Walter**
**An den Stegmatten 7**
**W-7630 Lahr 17 (Mietersheim) (DE)**

(74) Vertreter: **Patentanwälte Grünecker,**
**Kinkeldey, Stockmair & Partner**
**Maximilianstrasse 58**
**W-8000 München 22 (DE)**

EP 0 126 432 B2

## Beschreibung

Die Erfindung betrifft ein Fräswerkzeug nach dem Oberbegriff des Anspruchs 1.

Aus der DE-OS 3 125 185 ist ein derartiges Fräswerkzeug bekannt, bei dem jeder Schneidplattenträger mittels zweier Verstellkeilmechanismen in radialer Richtung und unabhängig davon in axialer Richtung verstellbar ist. Bei diesem bekannten Fräswerkzeug ist an jedem Schneidplattenträger je eine Schneidplatte in einer dafür vorgesehenen Ausnehmung mittels einer Befestigungsschraube befestigt. Eine Einjustierung der Schneidplatte hinsichtlich der Positionierung ihrer Schneidkanten durch Drehung um eine senkrecht zur Werkzeugachse (bzw. senkrecht zur Hauptebene der Schneidplatte) verlaufende Achse ist bei diesem bekannten Fräswerkzeug nicht möglich. Daher ist eine Einjustierung aller rings um den Umfang des bekannten Fräswerkzeugs angeordneten Schneidplatten in der Weise, dass ihre Schneidkanten auch in übereinstimmendem Winkel zur Achse des Fräswerkzeugs verlaufen, nicht möglich.

Aus der DE-OS 3036527 ist ein Fräswerkzeug bekannt, bei welchem die Radialverstellung des Schneidplattenträgers mittels zweier punktuell auf Stützflächen sich abstützender radial verlaufender, in Axialrichtung des Fräswerkzeugs hintereinander angeordneter Stellschrauben ohne Führung und Abstützung durch eine senkrecht zur Werkzeugachse verlaufende Radialfläche erfolgt. Da die beiden Stellschrauben unabhängig voneinander betätigt werden müssen und eine Führung des Schneidplattenträgers längs einer senkrecht zur Werkzeugachse verlaufenden Ebene nicht gegeben ist, ist eine ausschliesslich radial verlaufende Verstellung des Schneidplattenträgers ohne gleichzeitiges Kippen um eine quer zur Werkzeugachse verlaufende Achse nicht zuverlässig durchführbar. Eine Radialverstellung und Einstellung der Schneidplatte und eine Kippverstellung und Einstellung der Schneidplatte unabhängig voneinander sind bei dem bekannten Fräswerkzeug wegen des dort gegebenen Halterungs- und Verstellmechanismus ohne Zuhilfenahme zusätzlicher Kontrolleinrichtungen wie Durchlichtprojektoren, mittels derer während der Betätigung der Stellschrauben die Einstellbewegung kontrolliert wird, nicht möglich.

Schliesslich ist aus der EP-A-69 316 ein Fräswerkzeug bekannt, das Schneidbereiche und einstellbare Einsatzanordnungen aufweist. Jede der Anordnungen weist eine Tasche auf, welche ungefähr in einem Winkel von 10° bezüglich der ebenen Schneidfläche angeordnet ist. Eine Kassette ist in jeder Tasche eingesetzt und kann um die Achse einer Schraube gedreht werden und trägt eine Schneidplatte bzw. einen Einsatz. Mit dieser Anordnung kann eine radiale Einstellung der Schneidkanten der Schneidplatte durch Drehung der Kassette erreicht

werden. Da jedoch die jeweiligen Punkte der Schneidkanten sich mit der Kassettenbewegung entlang einer schraubenförmigen Linie aufgrund der Neigung der Tasche relativ zur ebenen Schneidfläche bewegen, können die Schneidkanten nicht unabhängig einstellbar in axialer oder radialer Richtung positioniert werden.

Es ist Aufgabe der vorliegenden Erfindung, ein Fräswerkzeug der im Oberbegriff des Anspruchs 1 angegebenen Art zu schaffen, welches bei einfachem Aufbau unabhängige Einstellungen der Schneidplatte in axialer Richtung und in radialer Richtung und unabhängig davon eine Kippeinstellung der Schneidplatte um eine quer zur Werkzeugachse verlaufende Achse auf einfach, rasch, genau und zuverlässig zu bewerkstelligende Weise bei zuverlässiger Halterung der Schneidplatte in ein- und festgestelltem Zustand ermöglicht.

Bei dem gattungsgemässen Fräswerkzeug wird diese Aufgabe durch die im kennzeichnenden Teil des Hauptanspruches angegebenen Merkmale gelöst.

Das erfindungsgemässe Fräswerkzeug hat gegenüber dem Stand der Technik wesentliche Vorteile. Durch die erfindungsgemässe Anordnung jeder Schneidplatte in einer ihrer Form angepassten Ausnehmung eines ihr zugeordneten Schneidplattenkäfigs, der seinerseits an dem zugeordneten Schneidplattenträger so angeordnet ist, dass er um eine im wesentlichen senkrecht zur Zentralachse des Grundkörpers verlaufende Ebene drehbar und relativ zum Schneidplattenträger feststellbar ist, wird erreicht, dass bei dem erfindungsgemässen Fräswerkzeug jeder Schneidplattenträger (und damit die an diesem angebrachte Schneidplatte) nicht nur in radialer Richtung und unabhängig davon in axialer Richtung ein- und feststellbar ist, sondern dass jede Schneidplatte unabhängig von den vorgenannten Einstellbewegungen auch durch eine Einstellverdrehung des sie tragenden Schneidplattenkäfigs so einstellbar ist, dass ihre Schneidkanten in Winkeln zur Zentralachse des Grundkörpers verlaufen, die mit den entsprechenden Winkeln der Schneidkanten der anderen Schneidplatten des Fräswerkzeugs exakt übereinstimmen und den vorgeschriebenen oder gewünschten Winkeln entsprechen. Bei dem bekannten Fräswerkzeug ist daher eine rasche, zuverlässige und exakte Einjustierung aller Schneidplatten auf einfache Weise möglich. Das erfindungsgemässe Fräswerkzeug hat einen einfachen, aus wenigen Teilen bestehenden Aufbau und ist hinsichtlich seiner Handhabung und im Betrieb robust, präzise und zuverlässig.

Eine zur Erzielung einer unabhängigen Einstellbarkeit in radialer und axialer Richtung besonders günstige Ausgestaltung des erfindungsgemässen Fräswerkzeugs ist dadurch gegeben, dass jeder Schneidplattenträger in im wesentlichen radialer Richtung bewegbar und feststellbar an je einem Tragkörper geführt und gehaltert ist, und dass jeder Tragkörper parallel zur Zentralachse des Grundkörpers relativ zu diesem bewegbar und feststellbar am Grundkörper geführt und gehaltert ist. Mit Vorteil ist das Fräswerkzeug gemäss der Erfindung so ausge-staltet, dass der Schneidplattenkäfig als Platte ausge-bildet ist, deren Rand in einem Teilbereich ihres Umfanges kreisbogenförmig verläuft und dort eine eine einen Abschnitt einer Kegelstumpfmantelfläche bildende Randfläche aufweist, und dass der s Schneidplattenträger eine Ausnehmung zur Aufnahme und Führung des Schneidplattenkäfigs aufweist, welche eine im wesentlichen in einer die Zentralachse einschliessenden Radialebene verlaufende Basisfläche zur Anlage einer Basis- t fläche des Schneidplattenkäfigs sowie eine diese teilweise begrenzende, einen Teilabschnitt einer Kegelstumpfmantelfläche bildende, komplementär zur kegeligen Randfläche des Schneidplattenkäfigs ausgebildete Randfläche aufweist und zumindest nach radial aussen und zur vorderen Stirnseite des Grundkörpers hin offen ist. Bei dieser Ausbildung liegt der Schneidplattenkäfig an einer parallel zur Zentralachse des Grundkörpers im wesentlichen radial verlaufenden Basisfläche des Schneidplattenträgers an und ist an dieser Fläche bei einer Verdrehung des Schneidplattenkäfigs geführt und nach Einstellung feststellbar. Durch die kegelstumpfähnliche Ausgestaltung einer Randfläche des Schneidplattenkäfigs und einer mit dieser zusammenwirkenden Randfläche einer Ausnehmung des Schneidplattenträgers zur Aufnahme der Schneidplatte wird eine zuverlässige, Verdrehungen zulassende Lagerung des Schneidplattenkäfigs im Schneidplattenträger erreicht, bei dem die komple-mentären kegeligen Randflächen von Schneidplat-tenkäfig und Schneidplattenträger nach Art einer Schwalbenschwanzführung übereinandergreifen. Damit ist auch eine formschlüssige Halterung des Schneidplattenkäfigs an dem Schneidplattenträger bei Krafteinwirkungen senkrecht zur Schneidplatte bewirkt.

Eine günstige Ausgestaltung des Fräswerkzeugs wird erfindungsgemäss dadurch erreicht, dass der Schneidplattenkäfig an seiner Basisfläche einen davon senkrecht abstehenden Vorsprung aufweist, der bei Anlage der Basisfläche des Schneidplattenkäfigs an der Basisfläche der Aufnahmeausnehmung des Schneidplattenträgers und der kegeligen Randfläche des Schneideplattenkäfigs an der kegeligen Randfläche der Aufnahmeausnehmung in eine kreis-bogenförmig konzentrisch zur kegeligen Randfläche verlaufende Ausnehmung in der Basisfläche der Auf-nahme-Ausnehmung des Schneidplattenträgers ein-taucht, und dass von den beiden Enden der kreisbogenförmigen Ausnehmung je eine Gewindedurchgangsbohrung mit einer in Richtung zum jeweiligen freien Rand des Schneidplattenträgers an dessen Stirnseite bzw. radial nach aussen liegender Seite hin verläuft, in welche je eine von aussen betätigbare Stellschraube, die mit ihrem inneren Ende zur Anlage an der jeweiligen ihr zugewandten Endfläche des Vorsprungs bringbar ist, eingeschraubt ist. Bei dieser Ausgestaltung ist es möglich, den Schneidplattenkäfig und die daran befindliche Schneidplatte relativ zum Schneidplattenträger durch genau abgestimmtes Verdrehen in die gewünschte Position einzustellen. Eine sehr feine Einstellung ist mittels der auf den Vorsprung am Schneidplattenkäfig einwirkenden Stellschrauben gewährleistet. Die eingestellte Position des Schneidplattenkäfigs wird durch die Stellschrauben auch zuverlässig festgelegt und gesichert.

Eine günstige Ausgestaltung ist dabei auch dadurch gegeben, dass die Aufnahmeausnehmung des Schneidplattenträgers an der ihrer Basisfläche gegenüberliegenden Seite offen ist und die Höhe der kegeligen Randfläche der Aufnahmeausnehmung der Dicke des plattenförmigen Schneidplattenkäfigs entspricht. Bei dieser Ausgestaltung besteht die Mög-lichkeit, auf die freie Seite des Schneidplattenträgers und insbesondere auf den Schneidplattenkäfig und die darin angebrachte Schneidplatte zur Festlegung derselben einzuwirken, beispielsweise durch Anpressen eines Klemmelements, aber auch beispielsweise durch Anschrauben von Befestigungsschrauben, wobei diese Handhabungen vorgenommen werden können, nachdem der Schneidplattenträger mit der Schneidplatte am Grundkörper des Fräswerkzeugs angeordnet sind und die erforderlichen Einstellungen der Schneidplatte vorgenommen worden sind.

Mit Vorteil ist das Fräswerkzeug gemäss der Erfindung dabei so ausgestaltet, dass am Aussenumfang des Grundkörpers neben jeder Halterungsausnehmung für einen Schneidplattenträger je eine zum Aussenumfang sowie zur vorderen Stirnseite des Grundkörpers und zur Schneidenfläche der jeweiligen Schneidplatte und dem diese halternden Schneidplattenkäfig hin offene Ausnehmung zur Aufnahme eines Füllkeils vorgesehen ist, und dass ein den Begrenzungsflächen der Ausnehmung in seiner Form komplementär angepasster Füllkeil in die Ausnehmung einsetzbar und darin befestigbar ist.

Eine günstige Ausgestaltung ist dabei dadurch gegeben, dass die zum Aussenumfang gerichtete Fläche des Füllkeils als konkave Spanlauffläche ausgebildet ist. In diesem Fall kann der von der benachbarten Schneidplatte angeschnittene Span entlang ihrer Spanlauffläche des Füllkeils abgeführt werden.

Eine besonders vorteilhafte Weiterbildung des Fräswerkzeugs wird dabei dadurch erreicht, dass jeder Füllkeil an seiner der jeweiligen Schneidplatte zugewandten Seite eine Klemmfläche aufweist, und in seiner Ausnehmung radial einwärts in einer ein Anpressen an die Schneidenfläche der Schneidplatte bewirkenden Richtung geführt bewegbar und in einer Klemmstellung, in der die Klemmfläche festklemmend an der Schneidenfläche der Schneidplatte anliegt, festlegbar ist. Bei dieser Ausgestaltung hat der Füllkeil neben seiner spanleitenden Funktion noch die weitere Funktion eines Organs zur Befestigung der Schneidplatte im Fräswerkzeug. Bei dieser Ausgestaltung können bei dem erfindungsgemässen Fräswerkzeug Schneidplatten zur Verwendung kommen, die kein Befestigungsloch, durch das eine Befestigungsschraube geführt werden müsste, aufweisen.

Eine alternative günstige Ausgestaltung eines erfindungsgemässen Fräswerkzeugs ist dadurch gegeben, dass der Schneidplattenkäfig eine Bohrung und der Schneidplattenträger eine Gewindebohrung aufweisen, die koaxial und im wesentlichen konzentrisch zur kegeligen Randfläche der Aufnahmeausnehmung des Schneidplattenträgers verlaufen, zur Aufnahme einer Befestigungsschraube zur Befestigung einer mit Befestigungsloch versehenen Schneidplatte am Schneidplattenkäfig. Bei dieser Ausgestaltung braucht ein neben dem Schneidplattenträger angeordneter Füllkeil keine Klemmfunktionen zu übernehmen, sondern dient dann ausschliesslich zur Spanführung.

Eine besonders günstige Ausgestaltung eines erfindungsgemässen Fräswerkzeugs ist dadurch gegeben, dass jede Halterungsausnehmung einen als zur vorderen Stirnfläche des Grundkörpers offenes Sackloch mit im wesentlichen senkrecht zur vorderen Stirnfläche des Grundkörpers verlaufender Achse und längs seiner Achse gleichbleibendem Querschnitt ausgebildeten Bereich und einen sich von der vorderen Stirnfläche des Grundkörpers über den vorderen Teil der Tiefe des Sackloches nach hinten und von dem oberen Bereich des Sackloches nach aussen bis zum Aussenumfang des Grundkörpers erstreckenden Bereich in Form eines Schachtes aufweist, dass in dem Sackloch ein Tragkörper mit einer dem Innenraum des Sacklochs angepassten Form axial verstellbar und feststellbar gelagert ist, dessen Länge etwa der Tiefe des Sackloches entspricht, und der an seinem vorderen Teil eine kanalartige Ausnehmung mit einer senkrecht zur Zentralachse des Grundkörpers verlaufenden Stützfläche aufweist, und dass der Schneidplattenträger als Körper mit einer parallel zu einer Seitenwand des Schachtes verlaufenden Seitenfläche in seinem äusseren Bereich und einer hinteren parallel zur Stützfläche der kanalartigen Ausnehmung verlaufenden Anlagefläche in seinem inneren Bereich ausgebildet ist und in der kanalartigen Ausnehmung verschiebbar geführt und in Anlage an dessen Stützfläche festlegbar ist. Damit ist der Schneidplattenträger relativ zu einem Tragkörper radial verschiebbar und festlegbar, wobei der Tragkörper seinerseits relativ zum Grundkörper axial verschiebbar und festlegbar ist. Hierin liegt ein wesentlicher Gedanke des erfindungsgemässen Fräswerkzeugs.

Weitere günstige Ausgestaltungen der Erfindung ergeben sich aus den Patentansprüchen. Im folgenden werden Ausführungsbeispiele der Erfindung in Verbindung mit der Zeichnung beschrieben. Es zeigen

Fig. 1 einen Ausschnitt einer Vorderansicht auf ein erfindungsgemässes Fräswerkzeug entsprechend einem ersten Ausführungsbeispiel,

Fig. 2 einen Axialschnitt durch das Fräswerkzeug gemäss Fig. 1 entsprechend der Schnittlinie II-II in Fig. 1,

Fig. 3 eine Draufsicht auf das Fräswerkzeug gemäss Fig. 1 in Richtung des Pfeiles III in Fig. 1,

Fig. 4 eine Schnittansicht des Fräswerkzeugs gemäss Fig. 1 entsprechend der Schnittlinie IV-IV in Fig. 1,

Fig. 5 eine Detail-Axialschnitt-Ansicht entsprechend der strichpunktiert umrandeten Einzelheit V in Fig. 2, in vergrössertem Massstab,

Fig. 6 einen Teil einer Vorderansicht eines zweiten Ausführungsbeispiels eines erfindungsgemässen Fräswerkzeugs,

Fig. 7 einen Axialschnitt durch das Fräswerkzeug gemäss Fig. 6 entsprechend der Schnittlinie VII-VII in Fig. 6,

Fig. 8 eine Draufsicht auf das Fräswerkzeug gemäss Fig. 6 in Richtung des Pfeiles VIII in Fig. 6, und

Fig. 9 eine Schnittansicht entsprechend der Schnittlinie IX-IX in Fig. 2 bzw. Fig. 7.

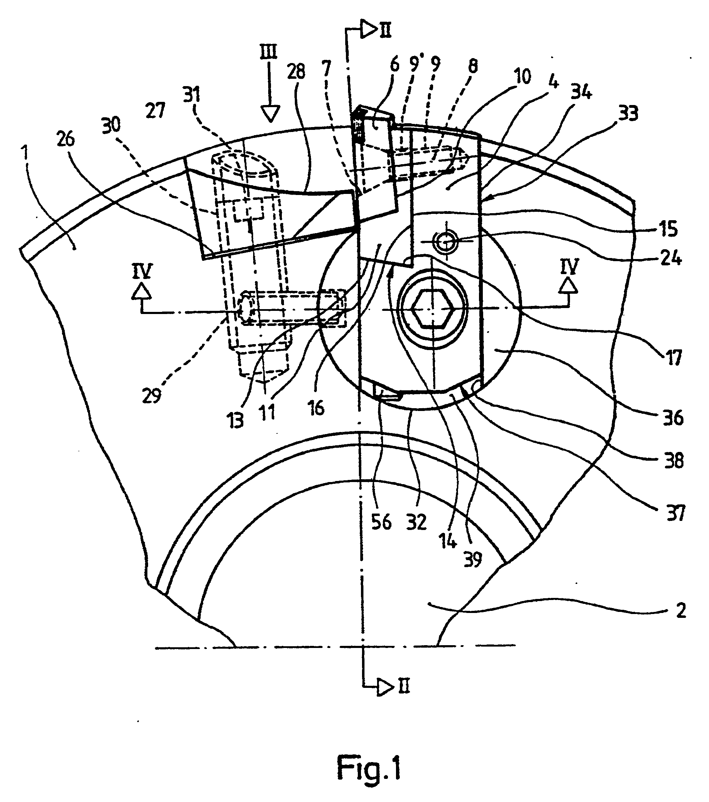

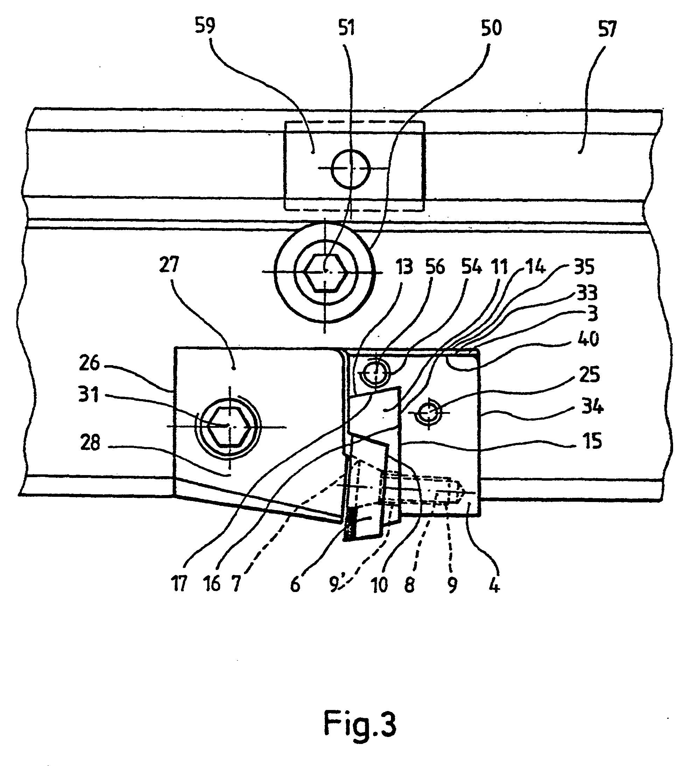

In den Fig. 1 bis 5 ist ein erstes Ausführungsbeispiel des Fräswerkzeugs dargestellt. Das Fräswerkzeug weist einen kreisscheibenförmigen Grundkörper 1 mit einer zentralen Befestigungsbohrung 2 und im Bereich des äusseren Umfanges um den Grundkörper gleichmässig verteilte, zu einer Stirnseite des Grundkörpers hin offene Halterungsausnehmungen 3, von denen in den Figuren nur eine dargestellt ist, zur Aufnahme und Halterung je eines Schneidplattenträgers 4 auf. Jeder Schneidplattenträger 4 ist in der jeweiligen Halterungsausnehmung 3 sowohl in zur Zentralachse 5 des Grundkörpers 1 paralleler, axialer Richtung, als auch unabhängig davon in, bezogen auf die Zentralachse 5, radialer Richtung in nachstehend noch im einzelnen erläuterter Weise verstellbar und festlegbar. Jeder Schneidplattenträger 4 trägt eine mit ihrer Hauptebene im wesentlichen radial verlaufend angeordnete Schneidplatte 6. In dem Ausführungsbeispiel gemäss den Fig. 1 bis 5 ist jede Schneidplatte 6 als sogenannte Lochplatte ausgebildet. Sie weist ein konisches Loch 7 auf, das in den Fig. 1 und 3 gestrichelt angedeutet ist. In dieses Loch kann eine Befestigungsschraube 8 eingeführt sein, die mit ihrem konischen Kopf zur Anlage im Loch 7 gebracht werden kann und die in eine Gewindebohrung 9 im Schneidplattenträger 4 zur Befestigung der Schneidplatte 6 an letzterem eingeschraubt werden kann. Die Schneidplatte 6 ist in einer ihrer Form angepassten Ausnehmung 10 eines Schneidplattenkäfigs 11 angeordnet. Der Schneidplattenkäfig 11 ist an dem Schneidplattenträger 4 um eine im wesentlichen senkrecht zu einer die Zentralachse 5 des Grundkörpers 1 enthaltenden Radialebene verlaufende ideelle Achse drehbar und relativ zum Schneidplattenträger 4 feststellbar geführt.

Der Schneidplattenkäfig 11 ist als Platte ausgebildet, deren Rand in einem Teilbereich 12 ihres Umfanges kreisbogenförmig verläuft und dort eine einen Abschnitt einer Kegelstumpfmantelfläche bildende Randfläche 13 aufweist. Der Schneidplattenträger 4 weist eine Ausnehmung 14 zur Aufnahme und Führung des Schneidplattenkäfigs 11 auf. Die Ausnehmung 14 weist ihrerseits eine im wesentlichen in einer die Zentralachse 5 einschliessenden Radialebene verlaufende Basisfläche 15 zur Anlage einer Basisfläche 16 des Schneidplattenkäfigs 11 auf sowie eine diese Basisfläche 15 teilweise begrenzende, einen Teilabschnitt einer Kegelstumpfmantelfläche bildende, komplementär zur kegeligen Randfläche 13 des Schneidplattenkäfigs 11 ausgebildete Randfläche 17. Die Ausnehmung 14 ist in radialer Richtung gesehen nach aussen und zur vorderen Stirnseite des Grundkörpers 1 hin offen.

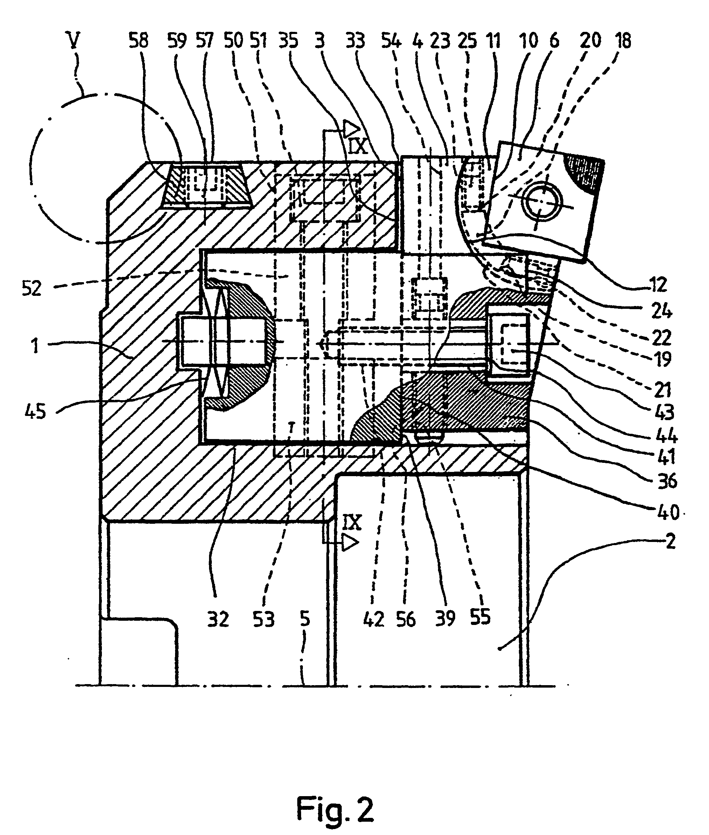

Der Schneidplattenkäfig 11 weist an seiner Basisfläche 16 einen davon senkrecht abstehenden Vorsprung 18 auf, der als in einem Kreisbogen konzentrisch zur kegeligen Randfläche 17 verlaufender Wandabschnitt mit zwei radial zum Kreisbogen verlaufenden Endflächen 19 bzw. 20 ausgebildet ist. Der Vorsprung 18 mit den Endflächen 19, 20 ist in Fig. 2 gestrichelt dargestellt. Bei Anlage der Basisfläche 16 des Schneidplattenkäfigs 11 an der Basisfläche 15 der Aufnahmeausnehmung 14 des Schneidplattenträgers 4 und der kegeligen Randfläche 17 des Schneidplattenkäfigs 11 an der kegeligen Randfläche 13 der Aufnahmeausnehmung 14 taucht der Vorsprung 18 in eine kreisbogenförmig konzentrisch zur kegeligen Randfläche 13 verlaufende Ausnehmung 21 in der Basisfläche 15 der Aufnahmeausnehmung 14 des Schneidplattenträgers 4 ein. Die kreisbogenförmige Ausnehmung 21 ist in Fig. 2 gestrichelt dargestellt. Von den beiden Enden der kreisbogenförmigen Ausnehmung 21 verläuft je eine Gewindedurchgangsbohrung 22 bzw. 23 mit einer in Richtung zum jeweiligen freien Rand des Schneidplattenträgers 4 an dessen Stirnseite bzw. radial aussen liegender Seite hin. In jede der Gewindedurchgangsbohrungen 22 bzw. 23 ist je eine von aussen betätigbare Stellschraube 24 bzw. 25, die mit ihrem inneren Ende zur Anlage an der jeweiligen ihr zugewandten Endfläche 19 bzw. 20 des Vorsprungs 18 bringbar ist, eingeschraubt.

Die Aufnahmeausnehmung 14 des Schneidplattenträgers 4 ist an der ihrer Basisfläche 15 gegenüberliegenden Seite offen. Die Höhe der kegeligen Randfläche 13 der Aufnahmeausnehmung 14 entspricht der Dicke des plattförmigen Schneidplattenkäfigs 11.

Wie aus den Fig. 1 und 3 erkennbar ist, ist die Ausnehmung 10 des Schneidplattenkäfigs 11 so angeordnet, dass die Schneidplatte 6 darin so orientiert ist, dass ihre die Schneidkanten enthaltende Hauptebene sowohl in axialer als auch in radialer Richtung, bezogen auf die Zentralachse 5 des Grundkörpers 1 gesehen, schräg verläuft. Auch die Gewindebohrung 9 im Schneidplattenträger 4 zur Aufnahme einer der Schneidplatte 6 haltenden Befestigungsschraube 8 ist dementsprechend nicht senkrecht zu einer die Zentralachse 5 des Grundkörpers einschliessenden Radialebene ausgerichtet, sondern senkrecht zur Hauptebene der Schneidplatte 6. Im übrigen ist aus den Fig. 1 und 3 ersichtlich, dass bei diesem Ausführungsbeispiel auch der Schneidplattenkäfig 11 eine mit der Gewindebohrung 9 im Schneidplattenträger 4 fluchtende Ausnehmung 9' aufweist, durch welche die Betätigungsschraube 8 mit Spiel geführt werden kann.

Am Aussenumfang des Grundkörpers 1 ist neben jeder Halterungsausnehmung 3 für einen Schneidplattenträger 4 je eine zum Aussenumfang sowie zur vorderen Stirnseite des Grundkörpers 1 und zur Schneidenfläche der jeweiligen Schneidplatte 6 und dem diese halternden Schneidplattenkäfig 11 hin offene Ausnehmung 26 zur Aufnahme eines Füllkeils 27 vorgesehen. Ein den Begrenzungsflächen der Ausnehmung in seiner Form komplementär angepasster Füllkeil 27 ist in die Ausnehmung 26 einsetzbar und darin befestigbar. Die zum Aussenumfang gerichtete Fläche 28 jedes Füllkeils 27 ist als konkave Spanlauffläche ausgebildet (Fig. 1 und 3).

Zur Befestigung des Füllkeils 27 in der Ausnehmung 26 des Grundkörpers 1 ist am Boden der Ausnehmung 26 eine Gewindebohrung 29 vorgesehen (Fig. 1), in die eine durch eine damit fluchtende Bohrung 30 in dem Füllkeil 27 geführte Befestigungsschraube 31 einschraubbar ist. In dem gezeigten Ausführungsbeispiel ist auch die Bohrung 30 im Füllkeil 27 als Gewindebohrung ausgestaltet mit einem zum Gewinde der Gewindebohrung 29 im Grundkörper gegenläufigen Gewinde. Die Befestigungsschraube 31 ist als sogenannte Differentialschraube mit zwei gegenläufigen Gewinden ausgebildet, die in die Gewinde der Bohrungen 29 bzw. 30 eingeschraubt sind. Bei Verdrehung der Befestigungsschraube 31 von aussen her wird der Keil 27 in Abhängigkeit von der Drehrichtung zum Boden der Ausnehmung 26 hin- bzw. von diesem wegbewegt.

Jede Halterungsausnehmung 3 im Grundkörper 1 weist einen als zur vorderen Stirnfläche des Grundkörpers offenes Sackloch 32 mit im wesentlichen senkrecht zur vorderen Stirnfläche des Grundkörpers verlaufender Achse und längs seiner Achse gleichbleibendem Querschnitt ausgebildeten Bereich und einen sich von der vorderen Stirnfläche des Grundkörpers 1 über den vorderen Teil der Tiefe des Sackloches 32 nach hinten und von dem oberen Bereich des Sackloches 32 nach aussen bis zum Aussenumfang des Grundkörpers 1 erstreckenden Bereich in Form eines Schachtes 33 auf (Fig. 1 bis 3). Jedes Sackloch 32 ist als kreiszylindrische Ausnehmung ausgebildet. Der Schacht 33 oberhalb des Sackloches 32 weist eine parallel zu einer durch die Zentralachse 5 des Grundkörpers verlaufenden idellen Radialebene verlaufende Seitenwand 34 (Fig. 1 und 3) und eine im rechten Winkel dazu verlaufende hintere Wand 35 (Fig. 2 und 3). Zu der Ausnehmung 26 im Grundkörper 1 zur Aufnahme eines Füllkeils 27 hin ist der Schacht 33 offen.

In dem zylindrischen Sackloch 32 ist ein zylindrisch ausgebildeter Tragkörper 36 mit einem dem Durchmesser des Sackloches angepassten Durchmesser in Gleitsitz axial verstellbar und feststellbar gehaltert. Die Länge des Tragkörpers 36 entspricht etwa der Tiefe des Sackloches 32. An seinem vorderen Teil weist der Tragkörper 36 eine nach vorne offene kanalartige Ausnehmung 37 (Fig. 1 ) mit parallelen Seitenwänden auf, deren

Abstand mit der Öffnungsweite des schachtartigen Bereiches 33 der Halterungsausnehmung 3 übereinstimmt. Eine Seitenwand 38 der Ausnehmung 37 fluchtet mit der Seitenwand 34 des Schachtes 33. Die kanalartige Ausnehmung 37 weist an ihrem von der Stirnfläche des Grundkörpers entfernt liegenden Grund eine zur Zentralachse 5 des Grundkörpers 1 senkrecht verlaufende Stützfläche 39 auf. Der Schneidplattenträger 4 ist als Körper mit zwei parallelen Seitenflächen, deren Abstand dem Abstand der Seitenwände des schachtartigen Bereichs 33 und der kanalartigen Ausnehmung 37 angepasst ist und einer hinteren, parallel zur Stützfläche 39 der kanalartigen Ausnehmung 37 verlaufenden Anlagefläche 40 in seinem inneren Bereich ausgebildet. Der Schneidplattenträger 4 ist in der kanalartigen Ausnehmung 37 verschiebbar geführt und in Anlage an deren Stützfläche 39 festlegbar. Der Schneidplattenträger 4 weist eine von seiner Vorderseite bis zu seiner hinteren Anlagefläche durchgehende Ausnehmung 41 auf. In dem zugehörigen Tragkörper 36 ist eine von der Stützfläche 39 der kanalartigen Ausnehmung 37 ausgehende Gewindebohrung 42 vorgesehen. Zur Befestigung des Schneidplattenträgers 4 am Tragkörper 36 ist eine Kopfschraube 43 durch die Ausnehmung 41 im Schneidplattenträger 4 hindurchgeführt und in die Gewindebohrung 42 des Tragkörpers 36 eingeschraubt. Wie aus Fig. 2 ersichtlich, ist die Weite der Ausnehmung 41, insbesondere in radialer Richtung, grösser als der Durchmesser des Gewindeschaftes der Kopfschraube 43. Zwischen der dem Schneidplattenträger 4 zugewandten Seite des Kopfes der Kopfschraube 43 und dem äusseren Rand der Ausnehmung 41 ist eine Tellerfeder 44 angeordnet.

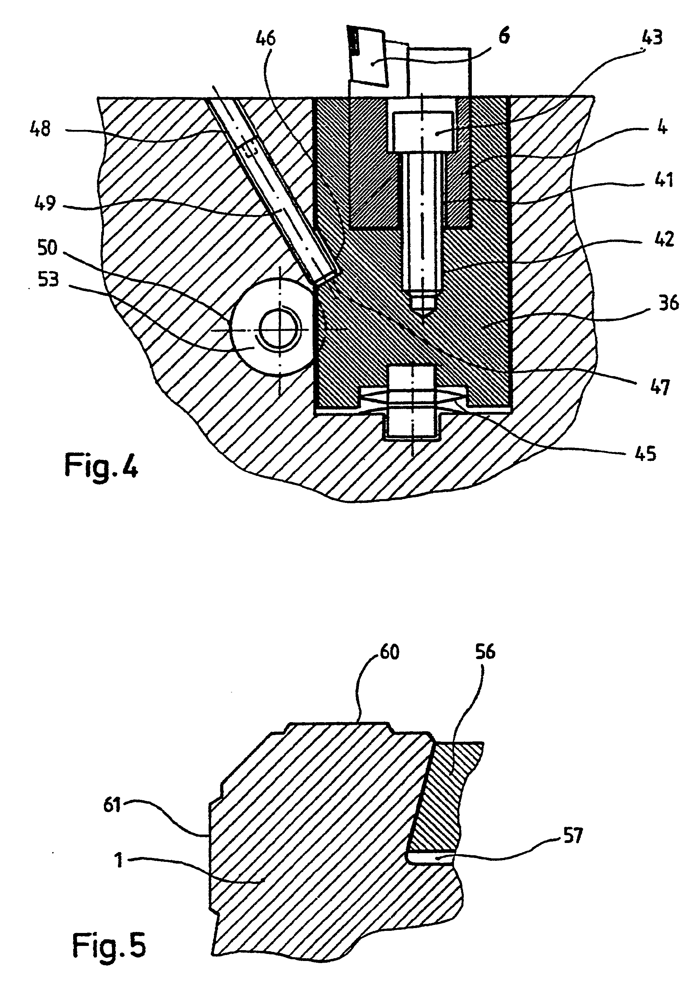

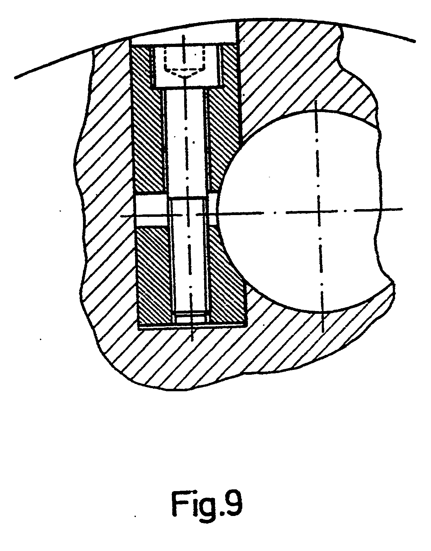

Zwischen dem Boden des Sackloches 32 und dem inneren Ende des zugehörigen Tragkörpers 36 ist eine Druckfederung vorgesehen, welche als Tellerfederpaket 45, das in einer Ausnehmung am inneren Ende des Tragkörpers 36 an einem dort angeordneten Zapfen aufgereiht ist, ausgebildet ist (Fig. 2). An einer Mantelfläche des Tragkörpers 36 ist eine Vertiefung 46 mit einer schräg nach aussen gerichteten Anlagefläche 47 vorgesehen (Fig. 4). Im Grundkörper 1 ist neben jedem Sackloch 32 eine von der vorderen Stirnfläche des Grundkörpers ausgehende, im Winkel auf die Achse des Sackloches 32 zu nach innen verlaufende, bis zur Innenwand des Sackloches 32 durchgehende Gewindebohrung 48 vorgesehen. Die innere Mündung der Gewindebohrung 48 liegt der Vertiefung 46 im Tragkörper 36 gegenüber. In die Gewindebohrung 48 ist eine von aussen betätigbare Verstellschraube 49, deren vorderes Ende an der Anlagefläche 47 der Vertiefung 46 zur Anlage bringbar ist, eingeschraubt (Fig. 4). Zur Festlegung des zylindrischen Tragkörpers 36 in dem zugehörigen Sackloch 32 im Grundkörper 1 ist im Bereich der Halterungsausnehmung 3 eine vom Aussenumfang hinter der Stützfläche 39 der kanalartigen Ausnehmung 37 im wesentlichen radial nach innen verlaufendes Sackloch 50 mit längs seiner Achse gleichbleibendem Querschnitt vorgesehen. Die Achse des Sackloches 50 verläuft im rechten Winkel zur Achse des den Tragkörper 36 aufnehmenden Sackloches 32 und in einem seitlichen Abstand von dieser Achse (Fig. 2, 3, 4 und 9). In das Sackloch 50 ist eine Differentialschraube 51, die an ihrem Schaft zwei Gewindebereiche mit entgegengesetzter Gangrichtung aufweist, auf welche je ein Klemmstück 52 bzw. 53 (Fig. 2 und 4) mit entsprechendem Innengewinde in einem axialen Abstand vom jeweils anderen Klemmstück aufgeschraubt sind, wobei beide Klemmstücke 52 und 53 in ihrem Querschnitt an den Querschnitt des Sackloches 50 angepasst sind, so eingesetzt, dass bei einem Anziehen der Differentialschraube 51 der Tragkörper 36 an seinem Mantel zwischen den einander zugewandten Enden der Klemmstücke 52 und 53 festklemmbar ist. Das Sackloch 50 ist kreiszylindrisch, und die Klemmstücke 52 und 53 sind als Abschnitte von Kreiszylindern mit einem dem Durchmesser des Sackloches 50 angepassten Durchmesser ausgebildet. Die einander zugewandten Flächen der Klemmstücke 52 und 53 sind als in ihrer Form an die Mantelform des Tragkörpers 36 angepasste Klemmflächen ausgestaltet (Fig. 9).

In dem Körper des Schneidplattenträgers 4 ist eine von seiner radial aussen liegenden Fläche bis zu seiner radial innen liegenden Fläche durchgehende Bohrung 54 mit Innengewinde 55 vorgesehen, die im wesentlichen senkrecht zur Achse der Ausnehmung 41 für die Kopfschraube 43 und im seitlichen Abstand von der Ausnehmung 41 verläuft. In die Bohrung 54 ist eine von aussen betätigbare Einstellschraube 56 eingeschraubt, deren inneres Ende zur Anlage an einem radial innen liegenden Bereich der Innenwand des Sackloches 32 für den Tragkörper 36 bringbar ist (Fig. 1, 2 und 3).

Im Grundkörper 1 des Fräswerkzeugs ist eine rings um den Umfang verlaufende Rille 57 vorgesehen, deren Seitenwände schräg einwärts verlaufen, so dass sich die Breite der Rille zu ihrem Boden hin vergrössert. In der Rille ist ein Auswuchtstein 58 mit komplementär zu den Seitenwänden der Rille 57 verlaufenden Seitenflächen angeordnet. Der Auswuchtstein 58 ist in der Rille 57 längs des Umfangs des Grundkörpers 1 verschiebbar. In dem Auswuchtstein 58 ist eine durchgehende Gewindebohrung vorgesehen, in die eine Schraube 59 eingeschraubt ist. Die Schraube 59 kann mit ihrem inneren Ende zur Anlage am Boden der Rille 57 gebracht werden. Durch Anziehen der Schraube 59 kann der Auswuchtstein 58 an jeder Stelle der Rille 57 längs deren Umfang unverrückbar festgeklemmt werden (Fig. 2 und 5).

Wie aus Fig. 5 ersichtlich, sind am Aussenumfang des Grundkörpers 1 an dessen hinterem Bereich und an der hinteren Stirnfläche des Grundkörpers 1 Ringflächen 60 bzw. 61 mit fein bearbeiteter Oberfläche vorgesehen, mittels welcher der Rundlauf bzw. der Planlauf des Fräswerkzeugs kontrolliert werden kann.

Im folgenden werden die Möglichkeiten des Einjustierens der Schneidplatten bei dem Fräswerkzeug gemäss den Fig. 1 bis 5 beschrieben.

Zur Einjustierung aller Schneidplatten 6 des Fräswerkzeugs wird zunächst jede Schneidplatte mit in Schneidrichtung orientierten Schneidkanten in die Ausnehmung 10 des zugehörigen Schneidplattenkäfigs 11 gesetzt. Die Befestigungsschraube 8 wird durch das Loch 7 und die Ausnehmung 9' im Schneidplattenkäfig 11 hindurchgeführt und in die Gewindebohrung 9 des Schneidplattenträgers 4 eingeschraubt. Die Befestigungsschraube 8 wird jedoch noch nicht fest angezogen, so dass der Schneidplattenkäfig 11 durch Verstellen der Einstellschrauben 24 und 25 relativ zum Schneidplattenträger 4 verdrehbar ist, wobei die kreisbogenförmige Randfläche 17 des Schneidplattenkäfigs 11 entlang der kreisbogenförmigen Randfläche 13 der Ausnehmung 10 des Schneidplattenträgers 4 gleitet. Durch diese Verdrehung kann der Schneidplattenkäfig 11 und mit ihm die Schneidplatte 6 in eine Position relativ zum Schneidplattenträger 4 gedreht werden, in der die radial äussere und die sich entlang der Stirnseite des Grundkörpers 1 erstreckende Schneidkante in den vorgeschriebenen bzw. gewünschten Winkelrichtungen zur Zentralachse 5 des Grundkörpers verlaufen. Sobald die gewünschte Winkelstellung der Schneidplatte erreicht ist, wird diese dadurch fixiert, dass beide Einstellschrauben 24 und 25 zur Anlage an die jeweiligen Flächen 19 bzw. 20 des Vorsprungs 18 des Scheidplattenkäfigs gebracht werden und dann die Befestigungsschraube 8 in die Gewindebohrung 9 des Schneidplattenträgers 4 eingeschraubt wird, bis die Schneidplatte 6 und der Schneidplattenkäfig 11 festklemmend mit dem Schneidplattenträger 4 verbunden und an diesem festgelegt sind. Anschliessend kann die Radialeinstellung der Schneidplatte vorgenommen werden, indem die Kopfschraube 43 so weit gelockert wird, dass der Schneidplattenträger 4 durch weiteres Herausdrehen der Einstellschraube 56 über den inneren Rand des Schneidplattenträgers hinaus radial nach aussen geschoben werden kann, oder durch weiteres Hineindrehen der Einstellschraube in den Schneidplattenträger 4 und radiales Schieben des Schneidplattenträgers 4 durch Druckanwendung von aussen in die gewünschte zu erzielende Radialposition relativ zur Zentralachse 5 des Grundkörpers 1 gebracht werden kann. Sobald diese Radialposition erreicht ist, wird der Schneidplattenträger 4 durch Festschrauben der Kopfschraube 43 wieder fest mit dem Tragkörper 36 verbunden. Anschliessend kann dann die axiale Einstellung der Schneidplatte erfolgen. Hierzu wird die Differentialschraube 51 von aussen her so verdreht, dass die Klemmstücke 52 und 53 auseinanderbewegt werden und damit eine Klemmung des Tragkörpers 36 in dem Sackloch 32 gelöst wird. Durch Verdrehen der Verstellschraube 49 hat man es dann in der Hand, den Tragkörper 36 gegen die Wirkung des Tellerfederpakets 45 axial weiter in das Sackloch hineinzuschieben oder mit Hilfe der Schubwirkung des Tellerfederpakets 45 axial im Sackloch 32 weiter nach aussen zu bewegen. Sobald die gewünschte Axialstellung der Schneidplatte 6 erreicht ist, kann dann die Differentialschraube 51 wieder angezogen werden, so dass die Klemmstücke 52 und 53 aufeinander zubewegt werden und zur klemmenden Anlage an der Mantelfläche des Tragkörpers 36 kommen und diesen damit in dem Sackloch 32 unverrückbar festklemmen. Bei dem Fräswerkzeug gemäss den Fig. 1 bis 5 ist jede Schneidplatte in drei Richtungen jeweils unabhängig einstellbar und feststellbar, und zwar dadurch, dass der die Schneidplatte 6 tragende Schneidplattenkäfig 11 relativ zum Schneidplattenträger verdrehbar ist und der Schneidplattenträger 4 seinerseits in im wesentlichen radialer Richtung an dem Tragkörper 36 geführt und gehalten ist, und der Tragkörper seinerseits parallel zur Zentralachse 5 des Grundkörpers 1 relativ zu diesem bewegbar und feststellbar ist.

Es sei noch darauf hingewiesen, dass eine Verdrehung des Schneidplattenkäfigs 11 relativ zum Schneidplattenträger 4 mittels der Stellschrauben 24 und 25 auch dann möglich ist, wenn die Befestigungsschraube 8 bereits angezogen ist. Die Axialeinjustierung des Tragkörpers 36 und damit der Schneidplatte 6 kann mit einer Genauigkeit im Bereich von 11000 mm erfolgen.

Bei dem Fräswerkzeug gemäss den Fig. 1 bis 5 kann das Füllstück 27 nach der Einjustierung der Schneidplatte 6 in die Ausnehmung 26 eingesetzt und mittels der Schraube 31 darin befestigt werden. Die der Schneidplatte benachbarte Wand des Füllstücks kommt bei diesem Ausführungsbeispiel nicht mit der Schneidplatte in Berührung. Beispielsweise kann die Dicke der Schneidplatte 6 etwas geringer sein als die Tiefe der Ausnehmung 10 im Schneidplattenkäfig 11, und/oder der Füllkeil ist so dimensioniert, dass ein Anliegen der der Schneidplatte benachbarten Wand an der Schneidplatte nicht eintritt. Die konkave Aussenfläche des Füllstücks 27 dient als Spanauffläche für die von der Schneidplatte geschnittenen Späne und ermöglicht eine kontinuierliche störungsfreie Abfuhr der Späne aus dem Fräswerkzeug heraus.

Nach der Einjustierung aller Schneidplatten des Fräswerkzeugs wird kontrolliert, ob das Fräswerkzeug einen « Planschlag » oder einen « Rundschlag» aufweist, und zwar mittels der Ringflächen 60 und 61, an denen beim Umlauf des Fräswerkzeugs geeignete Messwerkzeuge zur Anlage gebracht werden können. Nach dieser Kontrolle wird das Fräswerkzeug durch entsprechende Einstellung des Auswuchtsteins 58 am Umfang des Fräswerkzeugs exakt ausgewuchtet.

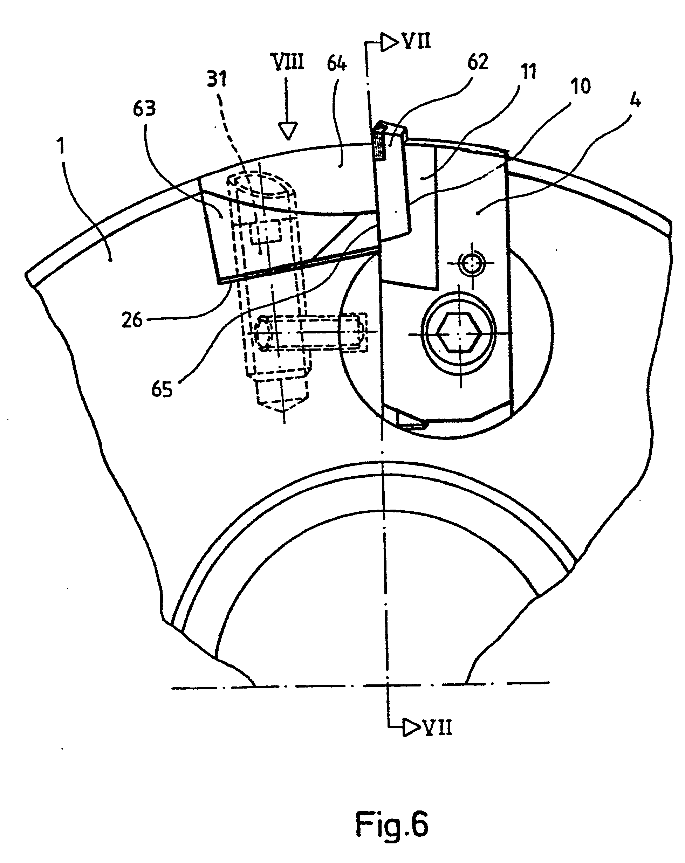

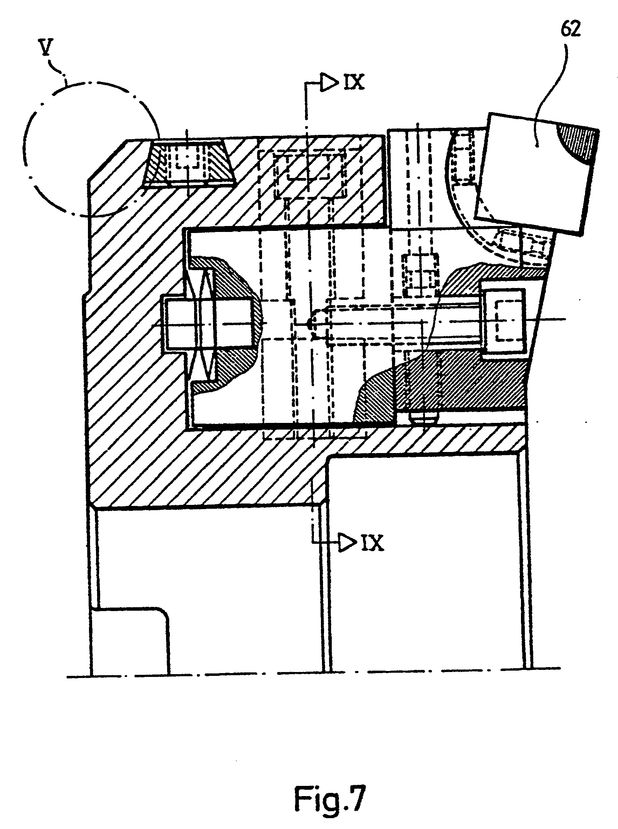

In den Fig. 6 bis 8 ist ein zweites Ausführungsbeispiel eines erfindungsgemässen Fräswerkzeugs dargestellt. In diesem Fräswerkzeug kommen Schneidplatten zur Anwendung, die keine Befestigungslöcher aufweisen, und die in ihrer Arbeitsstellung durch Festklemmen gehalten werden müssen. Der Aufbau des Fräswerkzeugs gemäss dem zweiten Ausführungsbeispiel stimmt weitgehend mit dem Aufbau des Fräswerkzeugs gemäss dem ersten Ausführungsbeispiel, wie er anhand der Fig. 1 bis 5 erläutert wurde, überein. Soweit bei dem Fräswerkzeug gemäss dem zweiten Ausführungsbeispiel Teile gegeben sind, die mit Teilen des Fräswerkzeugs gemäss dem ersten Ausführungsbeispiel übereinstimmen, wird von einer nochmaligen Beschreibung abgesehen, und es wird diesbezüglich auf die Beschreibung des ersten Ausführungsbeispiels verwiesen. Für übereinstimmende Teile werden auch im zweiten Ausführungsbeispiel die gleichen Bezugszeichen wie im ersten Ausführungsbeispiel verwendet. Die Fig. 4 und 5 bezüglich des ersten Ausführungsbeispiels gelten identisch auch für das zweite Ausführungsbeispiel.

Der einzige Unterschied im Aufbau des Fräswerkzeugs gemäss dem zweiten Ausführungsbeispiel gegenüber dem ersten Ausführungsbeispiel liegt in der Festlegung der Schneidplatte. Bei dem zweiten Ausführungsbeispiel liegt die Schneidplatte 62 in der ihrer Form angepassten Ausnehmung 10 des Schneidplattenkäfigs 11, ohne durch eine Befestigungsschraube mit dem Schneidplattenträger 4 verbunden zu sein. In der der Schneidplatte benachbarten Ausnehmung 26 im Grundkörper 1 ist im Falle des zweiten Ausführungsbeispiels ein Füllkeil 63 vorgesehen, der in seiner Form den Begrenzungsflächen der Ausnehmung 26 komplementär angepasst ist. Der Füllkeil 63 ist mittels der Schraube 31 in der anhand des ersten Ausführungsbeispiels bereits erläuterten Weise mit dem Grundkörper 1 verbindbar. Die zum Aussenumfang gerichtete Fläche 64 des Füllkeils 63 ist wiederum, wie beim ersten Ausführungsbeispiel, als konkave Spanaufflläche ausgebildet.

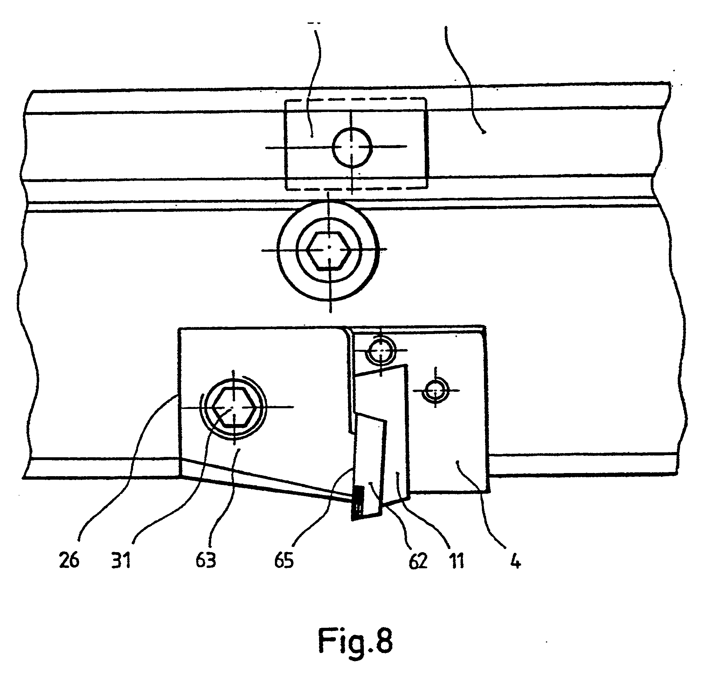

Jeder Füllkeil 63 weist an seiner der jeweiligen Schneidplatte 62 zugewandten Seite eine Klemmfläche 65 auf. Jeder Füllkeil 63 ist in seiner zugehörigen Ausnehmung 26 im Grundkörper 1 radial einwärts in einer ein Anpressen an die Schneidefläche der Schneidplatte 62 bwirkenden Richtung geführt bewegbar. Eine solche Einwärtsbewegung der Klemmfläche wird durch Anziehen der als Differentialschraube ausgebildeten Schraube 31 bewirkt. In einer Klemmstellung, in der die Klemmfläche 65 des Füllkeils 63 festklemmend an der dieser zugewandten Schneidenfläche der Schneidplatte 62 anliegt, ist der Füllkeil durch entsprechendes Festziehen der Differentialschraube 31 festlegbar (Fig. 6 und 8). Bei diesem Ausführungsbeispiel kann die Tiefe der Ausnehmung 10 im Schneidplattenkäfig etwas geringer dimensioniert sein als die Dicke der Schneidplatte 62, so dass letztere etwas über den Schneidplattenkäfig vorsteht und damit mit der Klemmfläche 65 in Berührung kommt, ohne dass der Schneidplattenkäfig von der Klemmfläche 65 erfasst wird.

Bei dem zweiten Ausführungsbeispiel hat das Füllstück 63 somit eine Doppelfunktion, nämlich die Funktion als Spanführungselement und die Funktion eines die Schneidplatte in ihrer Arbeitsstellung festlegenden Befestigungselements.

Die Einjustierung der Schneidplatten 62 bei dem Fräswerkzeug gemäss dem zweiten Ausführungsbeispiel erfolgt in analoger Weise wie die anhand des ersten Ausführungsbeispiels beschriebene Einjustierung der Schneidplatten 6 des ersten Ausführungsbeispiels. Dabei ist unter Umständen allerdings die endgültige Festklemmung der Schneidplatten 62 durch Festziehen der Füllkeile 63 erst nach Durchführung der Axial- und Radialeinstellung vorzunehmen.

Bei beiden vorstehend beschriebenen Ausführungsbeispielen von Fräswerkzeugen gemäss den Fig. 1 bis 5 bzw. 6 bis 8 besteht die Möglichkeit, die Schneidplattenkäfige von den zugehörigen Schneidplattenträgern abzunehmen und gegen andere in die jeweiligen Aufnahmeausnehmungen 14 der Schneidplattenträger passende Schneidplattenkäfige auszutauschen. Auf diese Weise ist es möglich, das Fräswerkzeug je nach Bedarf mit unterschiedlichen Schneidplatten zu bestücken, wobei jeweils Schneidplattenkäfige, deren Ausnehmung 10 in der Form an die jeweils zu verwendenden Schneidplatten angepasst sind, in die Schneidplattenträger eingesetzt werden. Die Ausnehmungen 10 in den Schneidplattenkäfigen können dabei nicht nur an die Form der zu verwendenden Schneidplatten angepasst sein, sondern auch so in Bezug auf die Zentralachse des Grundkörpers des Fräswerkzeugs orientiert sein, dass durch die sich dann jeweils ergebende Positionierung der Schneidplatte je nach Wunsch positive oder negative Spangeometrien gegeben sind und die jeweils gewünschten Spanwinkel vorliegen.

Bei den Fräswerkzeugen gemäss der Erfindung können Schneidplatten aus den unterschiedlichsten Werkstoffen Verwendung finden, beispielsweise Schneidplatten aus HSS, Hartmetall, diamantbestückte oder CBN-bestückte Schneidplatten oder Keramikschneidplatten. Es ist nur erforderlich, dass die Form der Schneidplatten auf die Form der Ausnehmungen 10 der Schneidplattenkäfige 11 abgestimmt ist.

Die Erfindung ist nicht auf die ausgeführten Beispiele beschränkt. Beispielsweise kann der axial verstellbare Tragkörper auch als Körper mit Rechteckquerschnitt ausgebildet sein, der in einem Sackloch mit entsprechendem Rechteckquerschnitt geführt und festlegbar ist.

## Patentansprüche

1. Fräswerkzeug mit einem kreisscheibenförmigen Grundkörper (1), der eine zentrale Befestigungsbohrung (2) und eine Mehrzahl von im wesentlichen im gleichen Abstand zueinander am äußeren Umfang angeordneten Halterungsausnehmungen (3) aufweist, die zu einer Stirnseite des Grundkörpers (1) offen sind, mit einer Mehrzahl von Schneidplattenträgern (4), von denen jeder in der jeweiligen Halterungsausnehmung (3) sowohl in axialer als auch unabhängig davon in radialer Richtung bezüglich des Grundkörpers (1) verstellbar und festlegbar ist, und mit einer Mehrzahl von Schneidplatten (6), von denen jede mittels eines zugeordneten Schneidplattenträgers (4) am Grundkörper (1) gelagert ist, und von denen jede mit ihrer Hauptebene jeweils im wesentlichen radial verlaufend angeordnet ist, wobei eine der Zahl der Schneidplattenträger (4) entsprechende Zahl von Schneidplattenkäfigen (11) vorgesehen ist, von denen jeder eine Ausnehmung (10) aufweist, die in ihrer Form der Form der Schneidplatte (6) angepaßt ist, und die jeweilige Schneidplatte (6) aufnimmt, wobei jeder der Schneidplattenkäfige (11) als Platte ausgebildet ist, deren Rand in einem Teilbereich (12) ihres Umfangs kreisbogenfrömig verläuft, und jeder der Schneidplattenkäfige (11) an dem jeweiligen Schneidplattenträger (4) um eine im wesentlichen senkrecht zu einer die Zentralachse (5) des Grundkörpers (1) enthaltenden Radialebene verlaufende Achse drehbar und relativ zum Schneidplattenträger (4) feststellbar geführt und mittels zweier Einstellschrauben (24, 25) einstellbar ist, die zur Anlage an die jeweiligen Flächen des Vorsprungs des Schneidplattenkäfigs (11) gebracht werden, wobei der Schneidplattenträger (4) eine Ausnehmung (14) zur Aufnahme und Führung des Schneidplattenkäfigs (11) aufweist, welche eine im wesentlichen in einer die Zentralachse (5) einschließenden Radialebene verlaufende Basisfläche (15) zur Anlage an einer Basisfläche (16) des Schneidplattenkäfigs (11) aufweist, und die Schneidplatte (6) mittels Feststelleinrichtungen (Befestigungsschraube 8; Füllkeil 63) am jeweiligen Schneidplattenkäfig (11) festlegbar ist, **dadurch gekennzeichnet, daß** der Rand in dem Teilbereich (12) eine einen Abschnitt einer Kegelstumpfmantelfläche bildende Randfläche (13) aufweist, und eine diese teilweise begrenzende, einen Teilabschnitt einer Kegelstumpfmantelfläche bildende, komplementär zur kegelförmigen Randfläche (13) des Schneidplattenkäfigs (11) ausgebildete Randfläche (17) aufweist und zumindest nach radial außen und zur vorderen Stirnseite des Grundkörpers (1) hin offen ist, und daß die Feststelleinrichtungen eine Befestigungsschraube (8) umfassen, die in die Gewindebohrung des Schneidplattenträgers (4) eingeschraubt ist und die die Schneidplatte (6) und den Schneidplattenkäfig (11) festklemmt, bzw. ein Füllkeil (63) vorgesehen ist, der die Schneidplatte (6) festklemmt.

2. Fräswerkzeug nach Anspruch 1, **daduch gekennzeichnet, daß** zur Führung und Halterung der Schneidplattenträger (4) je ein Tragköper (36) vorgesehen ist, der parallel zur Zentralachse (5) des Grundkörpers (1) relativ zu diesem bewegbar und feststellbar am Grundkörper (1) geführt und gehalten ist.

3. Fräwerkzeug nach Anspruch 2, **dadurch gekennzeichnet, daß** der Schneidplattenkäfig (11) an seiner Basisfläche (16) einen davon senkrecht abstehenden Vorsprung (18) aufweist, der bei Anlage der Basisfläche (16) des Schneidplattenkäfigs (11) an der Basisfläche (15) und der kegeligen Randfläche (17) des Schneidplattenkäfigs (11) an der kegeligen Randfläche (13) der Aufnahme-Ausnehmung (14) in eine kreisbogenförmig konzentrisch zur kegeligen Randfläche (13) verlaufende Ausnehmung (21) in der Basisfläche (15) der Aufnahme-Ausnehmung (14) des Schneidplattenträgers (4) eintaucht, und daß von den beiden Enden der kreisbogenförmigen Ausnehmung (21) je eine Grunddurchgangsbohrung (22 bzw. 23) mit einer in Richtung zum jeweiligen freien Rand des Schneidplattenträgers (4) an dessen Stirnseite bzw. radial außen liegenden Seite hin verläuft, in welche je eine von außen betätigbare Stellschraube (24 bzw. 25), die mit ihrem inneren Ende zur Anlage an der jeweiligen ihr zugewandten Endfläche (19 bzw. 20) des Vorsprungs (18) bringbar ist, eingeschraubt ist.

4. Fräswerkzeug nach Anspruch 2 oder 3, **dadurch gekennzeichnet,** daß die Aufnahme-Ausnehmung (14) des Schneidplattenträgers (4) and der ihrer Basisfläche gegenüberliegenden Seite offen ist und die Höhe der kegeligen Randfläche (13) der Aufnahme-Ausnehmung (14) der Dicke des plattenförmigen Schneidplattenkäfigs (11) entspricht.

5. Fräswerkzeug nach Anspruch 4, **dadurch gekennzeichnet,** daß am außenumfang des Grundkörpers neben jeder Halterungsausnehmung (3) für einen Schneidplattenträger (4) je eine zum Außenumfang sowie zur vorderen Stirnseite des Grundkörpers (1) und zur Schneidenfläche der jeweiligen Schneidplatte (6 bzw. 62) und dem diese halternden Schneidplattenkäfig (11) hin offene Ausnehmung (26) zur Aufnahme eines Füllkeils (27 bzw. 63) vorgesehen ist, und daß ein den Begrenzungsflächen der Ausnehmung (26) in seiner Form komplementär angepaßter Füllkeil (27 bzw. 63) in die Ausnehmung einsetzbar und darin befestigbar ist.

6. Fräswerkzeug nach Anspruch 5, **dadurch gekennzeichnet,** daß die zum Außenumfang gerichtete Fläche (28 bzw. 64) jedes Füllkeiles (27 bzw. 63) als konkave Spanlauffläche ausgebildet ist.

7. Fräswekzeug nach Anspruch 5 oder 6, **dadurch gekennzeichnet,** daß zur Befiestigung jedes Füllkeils (27 bzw. 63) in seiner Ausnehmung (26) am Boden derselben mindestens eine Gewindebohrung (29) vorgesehen ist, in die eine durch eine damit fluchtende Gewindebohrung (30) in dem Füllkeil (27 bzw. 63) geführte Differential-Befestigungsschraube (31) einschraubbar ist.

8. Fräswerkzeug nach mindestens einem der Ansprüche 5 bis 7, **dadurch gekennzeichnet,** daß jeder Füllkeil (63) an seiner der jeweiligen Schneidplatte (62) zugewandten Seite eine Klemmfläche (65) aufweist und in seiner Ausnehmung radial einwärts in einer ein Anpressen an die Schneidenfläche der Schneidplatte bewirkenden Richtung geführt bewegbar und in einer Klemmstellung, in der die Klemmfläche (65) festklemmend an der Schneidenfläche der Schneidplatte (62) anliegt, festlegbar ist.

9. Fräswerkzeug nach mindestens einem der Ansprüche 4 bis 7, **dadurch gekennzeichnet,** daß der Schneidplattenkäfig (11) eine Bohrung (9') und der Schneidplattenträger (4) eine Gewindebohrung (9) aufweisen, die koaxial und im wesentlichen konzentrisch zur kegeligen Randfläche (13) der Aufnahme-Ausnehmung (14) des Schneidplattenträgers (4) verlaufen, zur Aufnahme einer Befestigungsschraube (8) zur Befestigung einer mit Befestigungsloch versehenen Schneidplatte (6) am Schneidplattenträger (4).

10. Fräswerkzeug nach mindestens einem der Ansprüch 1 bis 9, **dadurch gekennzeichnet,** daß jede Halterungsausnehmung ein als zur vorderen Stirnfläche des Grundkörpers (1) offenes Sackloch (32) mit im wesentlichen senkrecht zur vorderen Stirnfläche des Grundkörpers verlaufende Achse und längs seiner Achse gleichbleibendem Querschnitt ausgebildeten Bereich und einen sich von der vorderen Stirnfläche des Grundkörpers über den vorderen Teil der Tiefe des Sackloches (32) nach ninten und von dem oberen Bereich des Sackloches (32) nach außen bis zum Außenumfang des Grundkörpers erstreckenden Bereich in Form eines Schachtes (33) aufweist, daß in dem Sackloch ein Tragkörper (36) mit einer dem Innenraum des Sackloches angepaßten Form axial verstellbar und feststellbar gehaltert ist, dessen Länge etwa der Tiefe des Sackloches (32) entspricht, und der an seinem vorderen Teil eine kanalartige Ausnehmung (37) mit einem senkrecht zur Zentralachse (5) des Grundkörpers (1) verlaufenden Stützläche (39) aufweist, und daß der Schneidplattenträger (4) als Körper mit einer parallel zu einer Seitenwand des Schachtes verlaufenden Seitenfläche in seinem äußeren Bereich und einer hinteren parallel zur Stützfläche (39) der kanalarigen Ausnehmung (37) verlaufenden Anlagefläche (40) in seinem inneren Bereich ausgebildet ist und in der kanalartigen Ausnehmung (37) verschiebbar geführt und in Anlage an dessen Stützfläche (39) festlegbar ist.

11. Fräswerkzeug nach Anspruch 10, **dadurch gekennzeichnet,** daß zwischen dem Boden jedes Sackloches (32) und dem inneren Ende des zugehörigen Tragkörpers (36) eine Druckfederung vorgesehen ist, daß an einer Mantelfläche des Tragkörpers (36) eine Vertiefung (46) mit einer schräg nach außen gerichteten Anlagefläche (47) vorgesehen ist, und daß im Grundkörper (1) neben jedem Sackloch (32) eine von der vorderen Stirnfläche ausgehende, im Winkel auf die Achse des Sackloches zu nach innen verlaufende, bis zur Innenwand der Sackloches (32) durchgehende Gewindebohrung (48) vorgesehen ist, deren innere Mündung der Vertiefung (46) im Tragkörper (36) gegenüberliegt, und in die eine von außen betätigbare Verstellschraube (49), deren vorderes Ende an der Anlagefläche (47) der Vertiefung (46) zur Anlage bringbar ist, eingeschraubt ist.

12. Fräswerkzeug nach Anspruch 11, **dadurch gekennzeichnet,** daß die Druckfederung als Tellerfederpaket (45) ausgebildet ist.

13. Fräswerkzeug nach Anspruch 11 oder 12, **dadurch gekennzeichnet,** daß jedes Sackloch (32) der Halterungsausnehmung im Grundkörper als kreiszylindrische Ausnehmung und der zugehörige Tragkörper (36) kreiszylindrisch mit einem dem Durchmesser des Sackloches (32) angepaßten Durchmesser ausgebildet sind.

14. Fräswerkzeug nach mindestens einem der Ansprüche 10 bis 13, **dadurch gekennzeichnet,** daß zur Festlegung jedes Tragkörpers (36) in dem zugehörigen Sacklock (32) im Grundkörper (1) im Bereich jeder halterungsausnehmung (3) eine vom Außenumfang hinter der Stützfläche (39) der kanalartigen Ausnehmung (37) im wesentlichen radial nach innen verlaufendes Sackloch (50)mit längs seiner Achse gleichbleibendem Querschnitt vorgesehen ist, dessen Achse im rechten Winkel zur Achse des den Tragkörper (36) aufnehmenden Sackloches (32) und in einem seitlichen Abstand von dieser Achse verläuft, un daß in das Sackloch eine Differentialschraube (51), die an ihrem Schaft zwei Gewindebereiche mit entgegengesetzter Gangrichtung aufweist, auf welche je ein Klemmstück (52 bzw. 53) mit entsprechendem Innengewinde in einem axialen Abstand vom anderen Klemmstück (53 bzw. 52) aufgeschraubt sind, wobei beide Klemmstücke (52,53) in ihrem Querschnitt an den Querschnitt des Sackloches (50) angepaßt sind, so eingesetzt ist, daß bei einem Anziehen der Differentialschraube (51) der Tragkörper (36) an seinem Mantel zwischen den einander zugewandten Enden der Klemmstücke (52,53) festklemmbar ist.

15. Fräswerkzeug nach Anspruch 14, **dadurch gekennzeichnet**, daß das Sackloch (50) kreiszylindrisch und die Klemmstücke (52,63) als Abschnitte von Kreiszylindern mit einem dem Durchmesser des Sackloches (50) angepaßten Durchmesser ausgebildet sind.

16. Fräswerkzeug nach Anspruch 14 oder 15, **dadurch gekennzeichnet**, daß die einander zugewandten Flächen der Klemmstücke (52,53) als in ihrer Form an die Mantelfläche des Tragkörpers (36) angepaßte Klemmflächen ausgebildet sind.

17. Fräswerkzeug nach mindestens einem der Ansprüche 10 bis 16, **dadurch gekennzeichnet**, daß jeder Schneidplattenträger (4) eine von seiner Vorderseite bis zu seiner hinteren Anlagefläche durchgehende Ausnehmung (41) aufweist, daß die kanalartige Ausnehmung (37) in dem Tragkörper (36) als nach vorne offener Ausschnitt augebildet ist, in welchem eine von der Stützfläche (39) ausgehende, mit der Ausnehmung (31) im Schneidplattenträger (4) fluchtende Gewindebohrung vorgesehen ist, deren Durchmesser kleiner ist als die Innenweite der Ausnehmung,und daß zur Befestigung des Schneidplattenträgers (4) am Tragkörper (36) eine Kopfschraube (43) durch die Ausnehmung (41) im Schneidplattenträger (4) hindurchgeführt und in die Gewindebohrung (42) des Tragkörpers eingeschraubt ist.

18.Fräaserlkzeug nach Anspruch 17, **dadurch gekennzeichnet**, daß zwischen der den Schneidplattenträger zugewandten Seite des Kopfes der Kopfschraube (43) und dem äußeren Rand der Ausnehmung (41) eine Tellerfeder (44) angeordnet ist.

19. Fräswerkzeug nach mindestens einem der Ansprüche 10 bis 18, **dadurch gekennzeichnet**, daß in dem Körper des Schneidplattenträgers (4) eine von seiner radial außen liegenden Fläche bis zu seiner radial innen liegenden Fläche durchgehende Bohrung (54) mit Innengewinde (55) vorgesehen ist, die im wesentlichen senkrecht zur Achse der Ausnehmung (41) für die Kopfschraube (43) und im seitlichen Abstand von dieser Ausnehmung (41) veläuft, und daß in diese Bohrung (54) eine von außen betätigbare Einstellschraube (56) eingeschraubt ist, deren inneres Ende zur Anlage an einem radial innen liegenden Beriech der Innenwand des Sackloches (32) für den Tragkörper (36) bringbar ist.

## Claims

1. A cutting tool comprising a discoid basic member (1) formed with a central securing bore (2) and with a number of substantialy equidistant retaining recesses (3) in the outer periphery, such recesses being open towards one end face of the basic member (1); a number of cutting tip holders (4) each adjustable and securable in its recess (3) axially and, independently of the axial adjustment, radially relatively to the basic member (1), and a number of cutting tips (6) each mounted on the basic member (1) by way of an associated cutting tip holder (4) and each being so disposed that its main plane extends substantially radially, cutting tip cages (11) being provided in a number corresponding to the number of cutting tip carriers (4) and each being formed with a recess (10) which is adapted in shape to the shape of the cutting tip (6) and which receives the particular cutting tip (6) concerned, each such cage (11) being in the form of a plate whose edge extends arcuately in a portion (12) of its periphery and each such cage (11) being so guided on the associated carrier (4) as to be rotatable around an axis extending substantially perpendicularly to a radial plane containing the central axis (5) of the basic member (1) and as to be securable relatively to the carrier (4), and is adjustable by means of two adjusting screws (24, 25) which can be brought into engagement with the associated surfaces of the projection of the cage (11), the carrier (4) being formed with a recess (14) to receive and guide the cage (11), the recess (14) having a base surface (15) which extends substantially in a radial plane including the central axis (5) and which is operative for the engagement of a base surface (16) of the cage (11), and the cutting tip (6) is securable to the associated cage (11) by securing means (securing screw 8; filling wedge 63), characterised in that the edge in the portion (12) has an edge surface (13) which forms a part of a frusto-conical generated surface, and has an edge surface (17) which partially limits the edge surface (13), forms part of a frusto-conical generated surface, is complementary to the conical edge surface (13) of the cage (11) and is open at least radially outwards and towards the front end face of the basic member (1), and the securing means comprise a securing screw (8) which is screwed into the tapped bore of the carrier (4) and which clamps the cutting tip (6) and the cage (11), and a filling wedge (63) is provided which clamps the cutting tip (6).

2. A tool according to claim 1, characterised in that one support member (36) each is provided to guide and retain the carriers (4) and is so guided and retained as to be movable parallel to the central axis (5) of the basic member (1) relatively thereto and as to be securable on the basic member (1).

3. A tool according to claim 2, characterised in htat the cage (11) has on its base surface (16) a projection (18) which extends perpendicularly therefrom and which, upon the cage base surface (16) abutting the base surface (15) and the conical edge surface (17) of the cage (11) at the conical edge surface (13) of the recess (14), engages in an arcuate recess (21) which extends concentrically of the conical edge surface (13) and which is present in the base surface (15) of the recess (14) in the carrier (4); and one basic continuous bore (22, 23 respectively) each extends from either end of the arcuate recess (21) by way of a side which extends towards the free edge of the carrier (4) and which engages with the end face or radially outward side thereof, each such bore receiving an externally activatable adjusting screw (24, 25 respectively) whose inner end can be brought into engagement with the end surface (19, 20 respectively) facing it of the projection (18).

4. A tool according to claim 2 or 3, characterised in that the recess (14) in the carrier (4) is open on the side opposite its base surface and the height of the conical edge surface (13) of the recess (14) corresponds to the thickness of the plate-like cage (11).

5. A tool according to claim 4, characterised in that the outer periphery of the basic member (11) is formed adjacent each carrier-retaining recess (3) with a recess (26) which is adapted to receive a filling wedge (27, 63 respectively) and which is open towards the outer periphery, towards the front end face of the basic member (1) and towards the cutting surface of the particular cutting tip (6, 62 respectively) concerned and the cage (11) retaining such tip, and a filling wedge (27, 63 respectively) which is of complementary shape to the boundary surfaces of the recess (26) is introducible into and securable therein.

6. A tool according to claim 5, characterised in that the surface (28, 64 respectively) of each wedge (27, 63 respectively) which is directed towards the outer periphery is operative as a concave chip-conveying surface.

7. A tool according to claim 5 or 6, characterised in that to secure each wedge (27, 63 respectively) in its recess (26) the base thereof is formed with at least one tapped bore (29) into which a differential securing screw (31) guided in the wedge (27, 63 respectively) by a tapped bore (30) registering with the tapped bore (29) can be screwed.

8. A tool according to at least one of claims 5 - 7, characterised in that each wedge (63) has a clamping surface (65) on its side near the associated cutting tip (62) and is guided in its recess for radial inwards movement in a direction causing the pressing on the cutting surface of the cutting tip and is securable in a clamping position in which the clamping surface (65) engages clampingly with the cutting surface of the cutting tip (62).

9. A tool according to at least one of claims 4 - 7, characterised in that the cage (11) is formed with a bore (9') and the carrier (4) is formed with a tapped bore (9), the latter bores extending coaxially and substantially concentrically of the conical edge surface (13) of the recess (14) for receiving the carrier (4), to receive a screw (8) to secure to the carrier (4) a cutting tip (6) formed with a securing aperture.

10. A tool according to at least one of claims 1 - 9, characterised in that each retaining recess has a blind bore (32) which is open towards the front end face of the basic member (1), the blind bore (32) having an axis which extends substantially perpendicularly to the front end face of the basic member, the blind bore (32) having a zone of constant cross-section along its axis and a shaft-like region (33) which extends from the front end face of the basic member by way of the front part of the depth of the blind bore (32) rearwardly and from the top part of the blind bore (32) outwardly as far as the outer periphery of the basic member; a support member (36) in shape adapted to the interior of the blind bore is so retained therein as to be axially adjustable and securable, the length of the support member (36) corresponding substantially to the depth of the blind bore (32), the support member (36) being formed in its front part with a channel-like recess (37) comprising a bearing surface (39) extending perpendicularly to the central axis (5) of the basic member (1); and the carrier (4) is in the form of a member having in its outer zone a side surface extending parallel to a shaft side wall and in its inner zone a rear bearing surface (40) which extends parallel to the bearing surface (39) of the recess (37), the carrier (4) being guided in the recess (37) for displacement and being securable in bearing engagement with the bearing surface (39) of the recess (37).

11. A tool according to claim 10, characterised in that compression spring means are provided between the base of each blind bore (32) and the inner end of the associated support member (36), a generated surface thereof is formed with a recess (46) having an outwardly inclining bearing surface (47), and the basic member (1) is formed adjacent each blind bore (32) with a tapped bore (48) which starts from the front end face, extends inwardly at an angle to the axis of the blind bore and is continuous as far as the inner wall of the blind bore (32), the inner opening of said bore being opposite the recess (46) in the member (36), there being screwed into the tapped bore (48) an externally activatable adjusting screw (49) whose front end can be moved into engagement with the bearing surface (47) of the recess (46).

12. A tool according to claim 11, characterised in that the compression spring means are in the form of a group of cup springs (45).

13. A tool according to claim 11 or 12, characterised in that each blind bore (32) in the retaining recess of the basic member is in the form of a cylindrical recess and the associated support member (36) is of cylindrical shape, with a diameter adapted to the diameter of the blind bore (32).

14. A tool according to at least one of claims 10-13, characterised in that to secure each support member (36) in the associated blind bore (32) the basic member (1) is formed near each retaining recess (3) with a blind bore (50) which extends substantially radially inwards from the outer periphery after the bearing surface (39) of the recess (37) and which is of constant cross-section along its axis, the same being disposed at right-angles to the axis of the blind bore (32) receiving the support member (36) and at a lateral distance from the latter axis, and the blind bore has so screwed into it a differential screw (51) having on its stem two screwthreaded zones with pitches of opposite hands, each such zone receiving a respective clamping member (52, 53) of corresponding internal screwthread and at an axial distance from the other clamping member (53, 52 respectively), the cross-section of both clamping members (52, 53) being adapted to the cross-section of the blind bore (50), that when the differential screw (51) is tightened the support member (36) is clampable on its surface between those ends of the clamping members (52, 53) which face one another.

15. A tool according to claim 14, characterised in that the blind bore (50) is cylindrical in shape and the clamping members (52, 63) are parts of cylinders of a diameter adapted to the diameter of the blind bore (50).

16. A tool according to claim 14 or 15, characterised in that those surfaces of the clamping members (52, 53) which face one another are in the form of clamping surfaces adapted in shape to the generated surface of the support member (36).

17. A tool according to at least one of claims 10-16, characterised in that each carrier (4) is formed with a recess (41) continuous from its front to its rear bearing surface, the channel-like recess (37) in the member (36) is in the form of a recess open at the front, such recess being formed with a tapped bore which starts from the surface (39) and which registers with the recess (21) in the carrier (4), the diameter of the latter bore being smaller than the internal width of the recess, and to secure the carrier (4) to the support member (36) a cap screw (43) extends through the recess (41) in the carrier (4) and is screwed into the tapped bore (42) in the support member (36).

18. A tool according to claim 17, characterised in that a cup spring (44) is disposed between the outer edge of the recess (41) and that side of the cap screw (43) which faces the carrier (4).

19. A tool according to at least one of claims 10-18, characterised in that the body of the carrier (4) is formed with a bore (54) which has an internal screwthread (55) and which is continuous from the radially outwards surface of the carrier (4) as far as the radially inwards surface thereof, the bore (54) extending substantially perpendicularly to the axis of the recess (41) for the cap screw (43) and being disposed at a lateral distance from the latter recess (41); and there is screwed into the bore (54) an externally activatable adjusting screw (56) whose inner end can be moved into engagement with a radially inwards zone of the inside wall of the blind bore (32) for the support member (36).

**Revendications**

1. Outil de fraisage comprenant un corps de base (1) en forme de disque circulaire qui présente un alésage central de fixation (2) et une pluralité de cavités de maintien (3) qui sont placées sur le pourtour extérieur pour l'essentiel à distance égale les unes des autres et sont ouvertes vers une face frontale du corps de base (1), comprenant une pluralité de supports de dent de coupe (4) qui peuvent être chacun déplacés dans la cavité de maintien (3) aussi bien en direction axiale que, indépendamment de cela, en direction radiale par rapport au corps de base (1) et peuvent être bloqués, et comprenant une pluralité de dents de coupe (6) qui sont chacune montées sur le corps de base (1) à l'aide d'un support de dent de coupe (4) correspondant et qui sont chacune disposées de manière que leur plan principal se prolonge pour l'essentiel radialement, un nombre de cages de dent de coupe (11) correspondant au nombre de supports de dent de coupe (4) étant prévu et chacune des cages présentant une cavité (10) dont la forme est adaptée à celle de la dent de coupe (6) et qui reçoit la dent de coupe (6) correspondante, chaque cage de dent de coupe (11) étant réalisée sous forme de plaque dont le bord se prolonge en arc de cercle sur une partie (12) de son pourtour et chaque cage de dent de coupe (11) étant guidée sur le support de dent de coupe (4) respectif de manière à pouvoir effectuer une rotation autour d'un axe se prolongeant pour l'essentiel perpendiculairement à un plan radial contenant l'axe central (5) du corps de base (1) et de manière à pouvoir être bloquée relativement au support de dent de coupe (4) et étant réglable à l'aide de deux vis de réglage (24, 25) qui sont amenées en appui contre les surfaces correspondantes de la saillie de la cage de dent de coupe (11), le support de dent de coupe (4) présentant une cavité (14) qui est destinée à recevoir et à guider la cage de dent de coupe (11) et présente une face de base (15) qui s'étend pour l'essentiel dans un plan radial incluant l'axe central (5) et est destinée à prendre appui sur une face de base (16) de la cage de dent de coupe (11) et la dent de coupe (6) pouvant être bloquée à l'aide de dispositifs de blocage (vis de fixation 8, cale de blocage 63) sur la cage de dent de coupe (11) considérée, caractérisé en ce que le bord dans la partie (12) présente une surface marginale (13) formant une partie d'une surface d'enveloppe tronconique, en ce que une surface marginale (17) qui limite partiellement cette surface marginale, forme une section partielle d'une surface d'enveloppe tronconique et est complémentaire de la surface marginale conique (13) de la cage de dent de coupe (11) est orientée au moins radialement vers l'extérieur et vers le côté frontal avant du corps de base (1) et en ce que les dispositifs de blocage comprennent une vis de fixation (8) qui est vissée dans le trou taraudé du support de dent de coupe (4) et bloque la dent de coupe (6) et le cage de dent de coupe (11) et qu'il est prévu une cale de blocage (63) qui bloque la dent de coupe (6).

2. Outil de fraisage selon le revendication 1, caractérisé en ce qu'il est prévu pour le guidage et le maintien de chaque support de dent de coupe (4), un corps porteur (36) qui est monté et guidé sur le corps de base (1) de manière à pouvoir être bloqué et à se déplacer parallèlement à l'axe central (5) du corps de base (1), relativement à ce dernier.

3. Outil de fraisage selon la revendication 2, caractérisé en ce que la cage de dent de coupe (11) présente sur sa face de base (16) une saillie (18) en dépassant perpendiculairement qui, lorsque la face de base (16) de la cage de dent de coupe (11) s'appuie contre la face de base (15) et que la surface marginale conique (17) de la cage de dent de coupe (11) s'appuie contre la surface marginale conique (13) de la cavité de réception (14), s'enfonce dans une cavité (21) s'étendant en forme d'arc de cercle concentriquement par rapport à la surface marginale conique (13) et ménagée dans la face de base (15) de la cavité de réception (14) du support de dent de coupe (4), et en ce qu'un alésage de passage (22 et 23) s'étend à partir de chacune des deux extrémités de la cavité en forme d'arc de cercle (21),vers un côté se trouvant en direction du bord libre du support de dent de coupe (4) sur la surface frontale de ce dernier ou, respectivement, radialement à l'extérieur, et dans chacun duquel est vissée une vis de réglage (24 et 25) actionnable de l'extérieur dont l'extrémité intérieure peut venir s'appuyer contre la surface finale (19 et 20) de la saillie (18) tournée vers la vis.

4. Outil de fraisage selon la revendication 2 ou 3, caractérisé en ce que la cavité de réception (14) du support de dent de coupe (4) est ouverte sur le côté opposé à sa face de base et que la hauteur de la surface marginale conique (13) de la cavité de reception (14) correspond à l'épaisseur de la cage de dent de coupe (11) en forme de plaque.

5. Outil de fraisage selon la revendication 4, caractérisé en ce qu'il est prévu sur le pourtour extérieur du corps de base, près de chaque cavité de maintien (3) pour un support de dent de coupe (4), une cavité (26) destinée à recevoir une cale de blocage (27 ou 63) et qui est ouverte en direction du pourtour extérieur ainsi que vers la face frontale avant du corps de base (1) et vers la surface de coupe de chaque dent de coupe (6 ou 62) et la cage de dent de coupe (11) maintenant cette dernière, et en ce qu'une cale de blocage (27 ou 63) dont la forme est adaptée de manière complémentaire aux surfaces périphériques de la cavité (26), peut être placée dans la cavité et y être fixée.

6. Outil de fraisage selon la revendication 5, caractérisé en ce que la surface (28 ou 64) de chaque cale de blocage (27 ou 63) qui est orientée vers le pourtour extérieur, est réalisée sous forme de surface concave de roulement pour les copeaux.

7. Outil de fraisage selon la revendication 5 ou 6, caractérisé en ce que pour fixer chaque cale de blocage (27 ou 63) dans sa cavité (26), il est prévu sur le fond de cette dernière au moins un taraudage (29) dans lequel peut être serrée une vis différentielle de fixation (31) guidée dans un taraudage (30) aligné sur le président et ménagé dans la cale de blocage (27 ou 63).

8. Outil de fraisage selon au moins l'une des revendications 5 à 7, caractérisé en ce que chaque cale de blocage (63) présente une surface de serrage (65) sur son côté tourné vers le dent de couque (62), est guidée dans sa cavité de manière à pouvoir se déplacer radialement vers l'intérieur dans une direction provoquant une pression contre le surface de coupe de le dent de coupe, et peut être fixée dans une position de serrage dans laquelle la surface de serrage (65) s'appuie avec un effet de blocage contre la surface de coupe de la dent de coupe (62).

9. Outil de fraisage selon au moins l'une des revendications 4 à 7, caractérisé en ce que la cage de dent de coupe (11) présente un alésage (9') et le support de dent de coupe (4) un taraudage (9) qui s'étendent coaxialement et pour l'essentiel concentriqument par rapport à la surface marginale conique (13) de la cavité de réception (14) du support de dent de coupe (4), pour recevoir une vis de fixation (8) destinée à fixer sur le support de dent de coupe (4) une dent de coupe (6) munie d'un trou de fixation.

10. Outil de fraisage selon au moins l'une des revendications 1 à 9, caractérisé en ce que chaque cavité de maintien présente une zone réalisée sous le forme d'un trou borgne (32) ouvert vers la face frontale avant du corps de base (1), avec un axe se prolongeant pour l'essentiel perpendiculairement à la face frontale avant du corps de base et une section transversale constante le long de son axe, et une zone réalisée sous la forme d'un puits (33) s'étendant à partir de la face frontale avant du corps de base, sur la partie avant de la profondeur du trou borgne (32) vers l'arrière, et à partir de la zone supérieure du trou borgne (32) vers l'extérieur jusqu'au pourtour extérieur du corps de base, et en ce qu'un corps porteur (36), dont la forme est adaptée à l'espace intérieur du trou borgne, est logé dans le trou borgne de maniére à pouvoir se déplacer axialement à être bloqué, dont la longueur correspond à peu près à la profondeur du trou borgne (32) et qui présente sur sa partie avant une cavité en forme de canal (37) avec une surface de support (39) s'étendant perpendiculairement à l'axe central (5) du corps de base (1), et en ce que le support de dent de coupe (4) est réalisé sous la forme d'un corps comportant dans sa zone extérieure une surface latérale s'étendant parallèlement à une paroi latérale du puits et dans sa zone intérieure une surface d'appui arrière (40) s'étendant parallèlement à la surface de support (39) de la cavité en forme de canal (37), est guidé de manière à pouvoir se déplacer dans la cavité en forme de canal (37) et peut être bloqué en position d'appui contre la surface de support (39) de cette dernière.

11. Outil de fraisage selon la revendication 10, caractérisé en ce qu'une suspension à ressorts de pression est prévue entre le fond de chaque trou borgne (32) et l'extrémité intérieur du corps porteur (36) correspondant, en ce qu'il est prévu, sur une surface d'enveloppe du corps porteur (36), un creux (46) avec une surface d'appui (47) orientée de manière inclinée vers l'extérieur, et en ce qu'il est prévu dans la corps de base (1), près de chaque trou borgne (32), un taraudage (48) partant de la face frontale avant, se prolongeant selon un angle avec l'axe du trou borgne vers l'intérieur et continuant jusqu'à la paroi intérieure du trou borgne (32), et dont l'ouverture intérieure se trouve en face du creux (46) dans le corps porteur (36) et dans lequel peut être vissée une vis de réglage (49) actionnable de l'extérieur dont l'extrémité avant peut venir s'appuyer contre la surface l'appui (47) du creux (46).

12. Outil de fraisage selon la revendication 11, caractérisé en ce que la suspension à ressorts de pression est réalisée sous la forme d'un groupe de ressorts Belleville (45).

13. Outil de fraisage selon la revendication 11 ou 12, caractérisé en ce que chaque trou borgne (32) de la cavité de maintien dans le corps de base est réalisé sous forme de cavité circulaire cylindrique et le corps porteur (36) correspondant à une forme cylindrique circulaire et présente un diamètre adapté au diamètre du trou borgne (32).

14. Outil de fraisage selon au moins l'une des revendications 10 à 13, caractérisé en ce que pour fixer chaque corps porteur (36) dans le trou borgne (32) correspondant dans le corps de base (1), il est prévu, dans la zone de chaque cavité de maintien (3),un trou borgne (50) s'étendant pour l'essentiel radialement vers l'intérieur à partir du pourtour extérieur derrière la surface de support (39) de la cavité (37) en forme de canal, présentant une section transversle constante le long de son axe et dont l'axe se prolonge à angle droit par rapport à l'axe du trou borgne (32) logeant le corps porteur (36) et à une distance radiale de cet axe, et en ce qu'une vis différentielle (51) qui présente sur sa tige deux zones de filetage ayant une direction de pas opposée et sur lequelles des pièces de serrage (52 et 53) ayant un taraudage correspondant sont vissées à une distance axiale l'une de l'autre, les deux cycles de serrage (52 et 53) ayant une section transversale adapée à celle du trou borgne (50), est placée dans le trou borgne de telle sorte que lors du serrage de la vis différentielle (51), le corps porteur (36) puisse être bloqué sur son enveloppe entre les extrémités des pièces de serrage (52, 53) qui sont tournées l'une vers l'autre.

15. Outil de fraisage selon la revendication 14, caractérisé en ce que le trou borgne (50) a une forme cylindrique circulaire et que les pièces de serrage (52, 53) sont réalisées sous forme de parties de cylindres circulaires avec un diamètre adapté au diamètre du trou borgne (50).

16. Outil de fraisage selon la revendication 14 ou 15, caractérisé en ce que les surfaces tournées l'une vers l'autre des pièces de serrage (52, 53) sont réalisées sous la forme de surfaces de serrage dont la forme est adaptée à la surface d'enveloppe du corps porteur (36).

17. Outil de fraisage selon au moins l'une des revendications 10 à 16, caractérisé en ce que chaque support de dent de coupe (4) présente une cavité (41) s'étendant à partir de sa face avant jusqu'à sa surface d'appui arrière, en ce que la cavité (37) en forme de canal dans le corps porteur (36) est réalisée sous la forme d'une découpure ouverte vers l'avant dans laquelle est prévu un taraudage partant de la surface de support (39) et aligné avec la cavité (21) dans le support de dent de coupe (4) et dont le diamètre est plus petit que la largeur intérieure de la cavité, et en ce que pour fixer le support de dent de coupe (4) sur le corps porteur (36), une vis à tête (43) est engaggée à travers la cavité (41) du support de dent de coupe (4) et est vissée dans le taraudage (42) du corps porteur.

18. Outil de fraisage selon la revendication 17, caractérisé en ce qu'un ressort Belleville (44) est placé entre le côté de la tête de la vis à tête (43) qui est tourné vers le support de dent de coupe et le bord extérieur de la cavité (41).

19. Outil de fraisage selon au moins l'une des revendictions 10 à 18, caractérisé en ce que dans le corps du support de dent de coupe (4), il est prévu un alésage (54) muni d'un taraudage (55) qui part de la surface du support se trouvant radialement à l'extérieur et se prolonge jusqu'à sa surface se trouvant radialement à l'intérieur et s'étend pour l'essentiel perpendiculairement à l'axe de la cavité (41) pour la vis à tête (43) et à une distance latérale de cette cavité (41), et en ce qu'une vis de réglage (56) actionnable de l'extérieur et dont l'extrémité intérieure peut venir s'appuyer contre une zone se trouvant radialement à l'intérieur de la paroi intérieure du trou borgne (32) pour le corps porteur (36), est vissée dans cet alésage (54).

Fig.1

Fig. 2

Fig.3

Fig.4

Fig.5

Fig.6

Fig.7

Fig.8

26    31      63      65              62  11      4

Fig.9